# EUROPEAN PATENT APPLICATION

(11) **EP 1 746 765 A2**
(43) Date of publication of application: **24.01.2007**
(21) Application number: 06076421.4
(22) Date of filing: 14.07.2006
(51) Int. Cl.: H04L 12/24

(54) **Information exchange system and method for reducing network load**

(30) Priority: 15.07.2005 JP 2005206274
(71) Applicant: NEC Corporation, Tokyo 108-01 (JP)
(72) Inventor: Shinohara, Noriko, Minato-ku, Tokyo (JP); Ito, Naoko, Minato-ku, Tokyo (JP); Hashiguchi, Atsushi, Minato-ku, Tokyo (JP); Hataya, Noriko, Minato-ku, Tokyo (JP); Ueda, Yasuyuki, Minato-ku, Tokyo (JP)
(74) Representative: Wenzel & Kalkoff

(57) **Abstract**

A resource list server issues SUBSCRIBE requests for individual resources in a list upon receiving a SUBSCRIBE request for the list. Then, when the resource list server has received first NOTIFY messages that indicate the status of the individual resources from a notifier for the resources, the resource list server sends second NOTIFY messages to a subscriber that has a subscription for the list, which includes the resources.

## Description

### BACKGROUND OF THE INVENTION

The present invention relates to information exchange systems and management servers, terminal units, and methods for reducing network load that are used in the information exchange systems, and in particular, relates to a method for reducing network load between subscribers and notifiers.

A framework between a subscriber and a notifier is disclosed in "Session Initiation Protocol (SIP)-Specific Event Notification: 3. Node Behavior" [RFC (Request for Comments) 3265, June 2002] (Document 1). The subscriber monitors the status of resources for a predetermined period of time, and the notifier sends notifications of the status of resources to the subscriber. In one case, this framework is applied to presence services [for example, see "A Presence Event Package for the Session Initiation Protocol (SIP): Status of this Memo" (RFC 3856, August 2004)] (Document 2). Presence services represent general systems that manage the status of individual resources. The basic architecture of presence services is disclosed in "A Model for Presence and Instant Messaging" (RFC 2778, February 2000) (Document 3). In this case, resources represent objects the status of which are monitored by the subscriber.

The aforementioned subscriber may not monitor only one resource. When the subscriber monitors a plurality of resources, in general, SUBSCRIBE (registration and subscription) requests need to be sent to the notifier for individual resources to manage subscriptions (contract and subscription). The subscriptions include information, such as the link between the subscriber and the notifier and event packages to be used.

The aforementioned subscribers have the following problems:
1. When subscriptions are started or updated for a plurality of resources at the same time, network traffic temporarily increases.
2. When the notifier does not accept an interval for updating subscriptions, which is requested by the subscriber, and requests frequent updating of subscriptions, the subscriber needs to frequently issue SUBSCRIBE requests.
3. When the notifier frequently makes notifications of the status of resources in response to SUBSCRIBE requests from the subscriber, unnecessary NOTIFY (notification) increases network traffic.

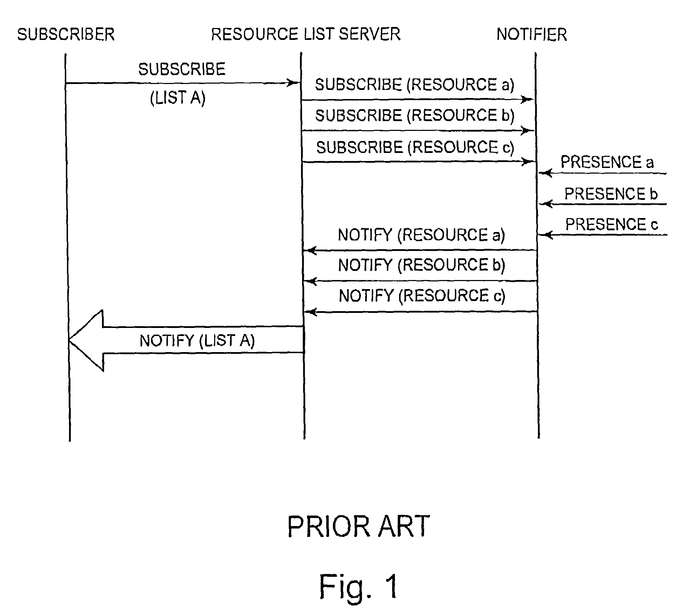

To solve these problems, a resource list server is proposed (for example, see "A Session Initiation Protocol (SIP) Event Notification Extension for Resource Lists: 4. Operation of List Subscriptions, 5. Using multipart/related to Convey Aggregate State" [IETF (Internet Engineering Task Force) Internet Draft, December 15, 2004 (http://www.ietf.org/internet-drafts/draft-ietf-simple-event-list-07.txt)] (Document 4) and "Extensible Markup Language (XML) Formats for Representing Resource Lists" [IETF Internet Draft, February 7, 2005 (http://www.ietf.org/internet-drafts/draft-ietf-simple-xcap-list-usage-05.txt)] (Document 5), which accepts SUBSCRIBE requests for a plurality of resources and issues one NOTIFY that includes the status of the plurality of resources, as shown in Fig. 1. Although this resource list server can reduce network load due to SUBSCRIBE requests, network load due to NOTIFY and load of processing on the subscriber may increase.

On the other hand, a method is proposed (for example, see "An Extensible Markup Language (XML) Based Format for Event Notification Filtering" [IETF Internet Draft, March 15, 2005 (http://www.ietf.org/internet-drafts/draft-ietf-simple-filter-format-05.txt)] (Document 6) and "Functional Description of Event Notification Filtering" [IETF Internet Draft, March 15, 2005 (http://www.ietf.org/internet-drafts/draft-ietf-simple-event-filter-funct-05.txt)] (Document 7), in which network load due to NOTIFY is reduced by filtering notifications of status. In this method, load of back-end subscriptions from a resource list server to resources can be reduced. However, the content of NOTIFY that is sent from the resource list server to the subscriber is not directly filtered.

In the aforementioned resource list server described in the document 4, when the subscriber issues SUBSCRIBE requests for a resource list that is managed by the resource list server, one NOTIFY is sent, which includes the status of resources that are included in the list. Thus, the network load is low compared with that in a case where SUBSCRIBE requests are issued for individual resources.

Moreover, in this resource list server described in the document 4, the differences in requests for, e.g. the valid period of subscriptions and the frequency of transmission of NOTIFY between a subscriber and a notifier for resources can be adjusted by the resource list server. However, when one NOTIFY is sent, which includes the status of the plurality of resources included in the list, network load temporarily increases, and load of interpretation of the content of the received NOTIFY on the subscriber also increases.

### SUMMARY OF THE INVENTION

Accordingly, it is an object of the present invention to provide an information exchange system for reducing network load due to NOTIFY messages that are sent from a notifier for resources to a subscriber and a management server, terminal units, and a method for reducing network load that are used in the information exchange system.

According to a first aspect of the present invention, an information exchange system comprises a first terminal unit, a second terminal unit, and a management server. The first terminal unit includes a monitoring section that monitors the status of at least one object to be monitored and a notification section that sends the management server a notification of the status of the at least one object to be monitored. The second terminal unit includes a status notification request sending section that sends the management server a status notification request that includes information for specifying a group of objects to be monitored. The group includes the at least one object to be monitored. The management server includes a monitored-object status retaining section that receives the status of the at least one object to be monitored from the first terminal unit and retains the received status and a first transmission processing section that sends the second terminal unit a notification signal for each of the at least one object to be monitored. The notification signal includes the status of each of the at least one object to be monitored. The management server may include a second transmission processing section instead of the first transmission processing section. In this case, the second transmission processing section sends the second terminal unit a plurality of notification signals that include the status of the at least one object to be monitored.

According to a second aspect of the present invention, an information exchange system comprises a notifier, a subscriber, and a management server. The notifier includes a monitoring section that monitors the status of at least one resource and a notification section that sends the management server a notification of the status of the at least one resource with a first NOTIFY message. The subscriber includes a SUBSCRIBE request sending section that sends the management server a SUBSCRIBE request that includes information for specifying a group of resources. The group includes the at least one resource. The management server includes a resource status retaining section that receives the status of the at least one resource sent from the notifier with the first NOTIFY message and retains the received status and a first transmission processing section that sends the subscriber a second NOTIFY message for each of the at least one resource. The second NOTIFY message includes the status of each of the at least one resource. The management server may include a second transmission processing section instead of the first transmission processing section. In this case, the second transmission processing section sends the subscriber a plurality of NOTIFY messages, as the second NOTIFY message, that include the status of the at least one resource.

Namely, an information exchange system according to the present invention includes a subscriber that monitors the status of resources for a predetermined period of time, a notifier that sends notifications of the status of the resources to the subscriber, and a resource list server that manages resource lists. In this information exchange system, when a SUBSCRIBE (registration and subscription) request is received for each resource list, a NOTIFY (notification) is sent, which includes the status of each resource in the resource list.

Specifically, in the information exchange system according to the present invention, the resource list server issues SUBSCRIBE requests for individual resources in a resource list upon receiving a SUBSCRIBE request for the list. Then, when the resource list server has received NOTIFY messages that indicate the status of the individual resources from the notifier for the resources, the resource list server sends NOTIFY messages to a subscriber that has a subscription for the list, which includes the resources.

Thus, in the information exchange system according to the present invention, when notifications of the status of individual resources need to be received, SUBSCRIBE requests for a plurality of resources can be put together into one request. Accordingly, the network load can be reduced when SUBSCRIBE requests are sent to start or update subscriptions.

Moreover, in the information exchange system according to the present invention, the network load can be reduced by sending a plurality of NOTIFY messages that include small content instead of sending one NOTIFY that includes large content. Moreover, in the information exchange system according to the present invention, load of interpretation of the content of one NOTIFY on the subscriber can be reduced by reducing the content of the NOTIFY Moreover, the network load can be reduced by sending NOTIFY messages at different points of time.

According to a third aspect of the present invention, a management server for an information exchange system is provided. The information exchange system includes a first terminal unit and a second terminal unit. The first terminal unit includes a monitoring section that monitors the status of at least one object to be monitored and a notification section that sends a notification of the status of the at least one object to be monitored. The second terminal unit includes a status notification request sending section that sends a status notification request that includes information for specifying a group of objects to be monitored. The group includes the at least one object to be monitored. The management server comprises a monitored-object status retaining section that receives the status of the at least one object to be monitored from the first terminal unit and retains the received status and a first transmission processing section that sends the second terminal section a notification signal for each of the at least one object to be monitored. The notification signal includes the status of each of the at least one object to be monitored. The management server may include a second transmission processing section instead of the first transmission processing section. In this case, the second transmission processing section sends the second terminal unit a plurality of notification signals that include the status of the at least one object to be monitored.

According to a fourth aspect of the present invention, a management server is for an information exchange system including a notifier and a subscriber. The notifier includes a monitoring section that monitors the status of at least one resource and a notification section that sends a notification of the status of the at least one resource with a first NOTIFY message. The subscriber includes a SUBSCRIBE request sending section that sends a SUBSCRIBE request that includes information for specifying a group of resources. The group includes the at least one resource. The management server comprises a resource status retaining section that receives the status of the at least one resource sent from the notifier with the first NOTIFY message and retains the received status and a first transmission processing section that sends the subscriber a second NOTIFY message for each of the at least one resource. The second NOTIFY message includes the status of each of the at least one resource. The management server may include a second transmission processing section instead of the first transmission processing section. In this case, the second transmission processing section sends the subscriber a plurality of NOTIFY messages, as the second NOTIFY message, that include the status of the at least one resource.

According to a fifth aspect of the present invention, a terminal unit constitutes, together with a management server and a different terminal unit, an information exchange system. The different terminal unit includes a monitoring section that monitors the status of at least one object to be monitored and a notification section that sends the management server a notification of the status of the at least one object to be monitored. The terminal unit comprises a status notification request sending section that sends the management server a status notification request that includes information for specifying a group of objects to be monitored. The group includes the at least one object to be monitored. The terminal unit further comprises a first determining section that determines whether a notification signal represents a status notification requested with the status notification request when the notification signal is sent from the management server for each of the at least one object to be monitored. The notification signal includes the status of each of the at least one object to be monitored. The terminal unit still further comprises an information interpreting section that interprets the notification signal when it is determined that the notification signal represents the status notification requested with the status notification request. The terminal unit may include a second determining section instead of the first determining section. In this case, the second determining section determines whether a plurality of notification signals represent status notifications requested with the status notification request when the notification signals are sent from the management server. The notification signals includes the status of the at least one object to be monitored.

According to a sixth aspect of the present invention, a terminal unit constitutes, together with a management server and a different terminal unit, an information exchange system. The different terminal unit includes a monitoring section that monitors the status of at least one resource and a notification section that sends the management server a notification of the status of the at least one resource. The terminal unit comprises a SUBSCRIBE request sending section that sends the management server a SUBSCRIBE request that includes information for specifying a group of resources. The group includes the at least one resource. The terminal unit further comprises a first determining section that determines whether a NOTIFY message represents a status notification requested with the SUBSCRIBE request when the NOTIFY message is sent from the management server for each of the at least one resource. The NOTIFY message includes the status of each of the at least one resource. The terminal unit still further comprises an information interpreting section that interprets the NOTIFY message when it is determined that the NOTIFY message represents the status notification requested with the SUBSCRIBE request. The terminal unit may include a second determining section instead of the first determining section. In this case, the second determining section determines whether a plurality of NOTIFY messages represent status notifications requested with the SUBSCRIBE request when the NOTIFY messages are sent from the management server. The NOTIFY messages includes the status of the at least one resource.

According to a seventh aspect of the present invention, a method for reducing network load is provided. The method is applied to an information exchange system that includes a first terminal unit, a second terminal unit, and a management server. The first terminal unit includes a monitoring section that monitors the status of at least one object to be monitored and a notification section that sends a notification of the status of the at least one object to be monitored. The second terminal unit includes a status notification request sending section that sends a status notification request that includes information for specifying a group of objects to be monitored. The group includes the at least one object to be monitored. The method comprises a step in the management server of receiving the status of the at least one object to be monitored from the first terminal unit and retaining the received status in a monitored-object status retaining section and a first transmitting step in the management server of sending the second terminal unit a notification signal for each of the at least one object to be monitored. The notification signal includes the status of each of the at least one object to be monitored. The method may include a second transmitting step in the management server instead of the first transmitting step, and, in the second transmitting step, a plurality of notification signals that include the status of the at least one object to be monitored are sent to the second terminal unit.

According to an eighth aspect of the present invention, the method is applied to an information exchange system that includes a notifier, a subscriber, and a management server. The notifier includes a monitoring section that monitors the status of at least one resource and a notification section that sends a notification of the status of the at least one resource with a first NOTIFY message. The subscriber includes a SUBSCRIBE request sending section that sends a SUBSCRIBE request that includes information for specifying a group of resources. The group includes the at least one resource. The method comprises a step in the management server of receiving the status of the at least one resource sent from the notifier with the first NOTIFY message and retaining the received status in a resource status retaining section and a first transmitting step in the management server of sending the subscriber a second NOTIFY message for each of the at least one resource. The second NOTIFY message includes the status of each of the at least one resource. The method may include a second transmitting step in the management server instead of the first transmitting step, and, in the second transmitting step, a plurality of NOTIFY messages that include the status of the at least one resource are sent to the subscriber.

### BRIEF DESCRIPTION OF THE DRAWINGS

Fig. 1 is a sequence chart showing typical operation of a conventional information exchange system;
Fig. 2 is a block diagram showing the structure of an information exchange system according to a first embodiment of the present invention;
Fig. 3 shows typical list tables in a list management unit according to the first embodiment;
Fig. 4 is a sequence chart showing the operation of the information exchange system according to the first embodiment;
Figs. 5 to 7 are flowcharts showing the process of receiving a SUBSCRIBE according to the first embodiment;
Figs. 8 and 9 are flowcharts showing the process of receiving an UNSUBSCRIBE according to the first embodiment;
Fig. 10 is a flowchart showing the process of receiving a NOTIFY according to the first embodiment;
Fig. 11 is a block diagram showing the structure of a subscriber according to the first embodiment;
Fig. 12 is a flowchart showing typical operation of the subscriber according to the first embodiment;
Fig. 13 is a block diagram showing the structure of an information exchange system according to a second embodiment of the present invention; and
Fig. 14 is a flowchart showing the process of receiving a SUBSCRIBE (updating) according to a third embodiment of the present invention.

### DESCRIPTION OF THE PREFERRED EMBODIMENTS

### (First Embodiment)

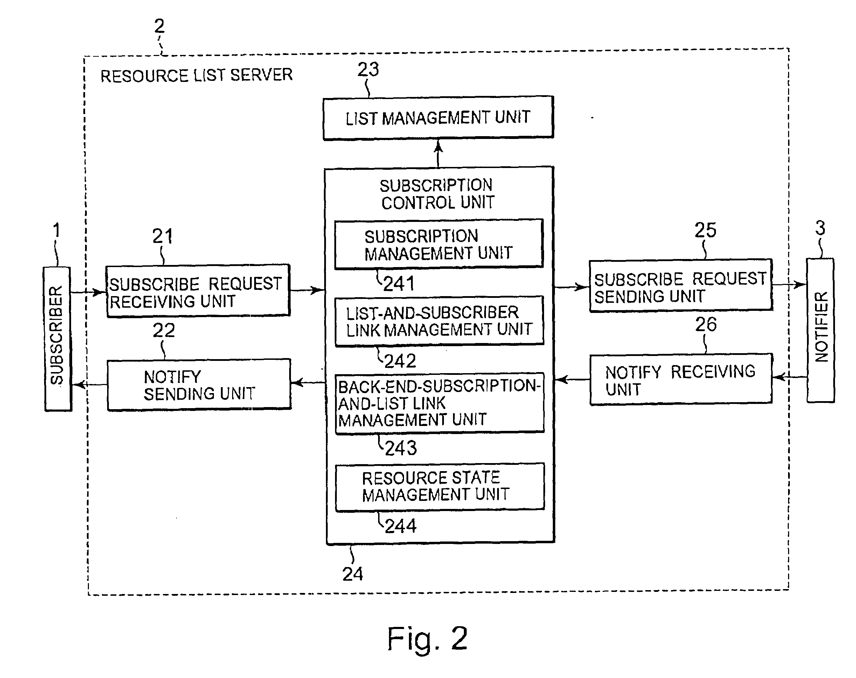

Fig. 2 is a block diagram showing the structure of an information exchange system according to a first embodiment of the present invention. In Fig. 2, the information exchange system includes a subscriber (a terminal unit or a second terminal unit) 1, a resource list server 2, and a notifier (a different terminal unit or a first terminal unit) 3. The subscriber 1 monitors the status of resources (objects to be monitored by the subscriber 1) for a predetermined period of time, and the notifier 3 sends notifications of the status of the resources to the subscriber 1.

The resource list server 2 manages lists of resources. The information of the status of these resources is exchanged between the subscriber 1 and the notifier 3. The resource list server 2 includes a SUBSCRIBE (registration and subscription) request receiving unit 21, a NOTIFY (notification) sending unit 22, a list management unit 23, a subscription (contract and subscription) control unit 24, a SUBSCRIBE request sending unit 25, and a NOTIFY receiving unit 26. Fig. 2 shows only components that are required to describe the operation in the first embodiment.

The subscription control unit 24 includes a subscription management unit 241, a list-and-subscriber link management unit 242, a back-end-subscription-and-list link management unit 243. and a resource status management unit 244. The resource status management unit 244 may be called monitored-object status retaining means or resource status retaining means.

The list management unit 23 manages the identifiers of resources included in individual resource lists. The SUBSCRIBE request receiving unit 21 and the NOTIFY sending unit 22 provide interfaces to the subscriber 1. When the SUBSCRIBE request receiving unit 21 has received a SUBSCRIBE or UNSUBSCRIBE request for a resource list managed by the list management unit 23 from the subscriber 1, the SUBSCRIBE request receiving unit 21 transfers the request to the subscription management unit 241. The NOTIFY sending unit 22 sends the information of the status of resources to the subscriber 1 that subscribes for a list that includes the resources. The information of the status of the resources is included in a NOTIFY message.

The SUBSCRIBE request sending unit 25 and the NOTIFY receiving unit 26 provide interfaces to the notifier 3 for resources. The SUBSCRIBE request sending unit 25 sends a SUBSCRIBE and UNSUBSCRIBE request for resources from the resource list server 2 on the behalf of the subscriber 1. The NOTIFY receiving unit 26 receives a NOTIFY message that includes the status of resources from the notifier 3 for the resources.

The notifier 3 for resources may be dedicated to each resource or, like a presence server, may handle the status of a plurality of resources. The presence server is a physical entity (function) and functions as a presence agent or a proxy server for SUBSCRIBE requests. When the presence server functions as a presence agent, the presence server has the presence information of the presentity (the presence or status of everything, for example, status such as "attended" or "out"). When the presence server functions as a proxy server, SUBSCRIBE requests are transferred to another entity that functions as a presence agent.

The subscription control unit 24 generates back-end subscriptions on the basis of a SUBSCRIBE request from the subscriber 1 for a list. The back-end subscriptions represent subscriptions from the resource list server 2 for resources. The subscriptions include information, such as the link between the subscriber 1 and the notifier 3 and event packages to be used.

The subscription management unit 241 manages a subscription for a list from the subscriber 1 and back-end subscriptions. The subscription management unit 241 generates, updates, or stops a subscription upon receiving a SUBSCRIBE or UNSUBSCRIBE request from the subscriber 1.

The list-and-subscriber link management unit 242 retains groups of subscribers for individual lists. When the subscriber 1 is associated with a list, the list-and-subscriber link management unit 242 requests the back-end-subscription-and-list link management unit 243 to add the list. Moreover, when the subscriber 1 associated with a list has disappeared, the list-and-subscriber link management unit 242 requests the back-end-subscription-and-list link management unit 243 to delete the list.

The back-end-subscription-and-list link management unit 243 retains the links between subscriptions from the resource list server 2 for resources and corresponding lists that have caused the subscriptions to be generated. The resource status management unit 244 retains the status of resources, which is obtained by NOTIFY for back-end subscriptions.

Each back-end subscription is valid during a period in which at least one list is associated with the back-end subscription. Each back-end subscription disappears when lists associated with the back-end subscription have disappeared. Then, an UNSUBSCRIBE request is sent from the SUBSCRIBE request sending unit 25, and the status of resources managed by the resource status management unit 244 is set invalid.

In Fig. 2, the resource list server 2 and the notifier 3 are separately shown. Alternatively, when the notifier 3 is a presence server, the resource list server 2 and the notifier 3 can be packaged in a single server.

In the information exchange system according to the first embodiment, when the resource list server 2 has received a SUBSCRIBE request for a list, the resource list server 2 issues SUBSCRIBE requests for individual resources included in the list. Moreover, when the resource list server 2 has received a NOTIFY message that includes the status of a resource from the notifier 3 for the resource, the resource list server 2 sends a NOTIFY message to the subscriber 1 that retains a subscription for the list, which includes the resource.

Thus, in the information exchange system according to the first embodiment, when notifications of the status of individual resources need to be received, SUBSCRIBE requests for a plurality of resources can be put together into one request. Accordingly, the network load can be reduced when SUBSCRIBE requests are sent to start or update subscriptions.

Moreover, in the information exchange system according to the first embodiment, the network load can be reduced by sending a plurality of NOTIFY messages that include small content instead of sending one NOTIFY that includes large content.

Moreover, in the information exchange system according to the first embodiment, load of interpretation of the content of one NOTIFY on the subscriber 1 can be reduced by reducing the content of the NOTIFY. Moreover, the network load can be reduced by sending NOTIFY messages at different points of time.

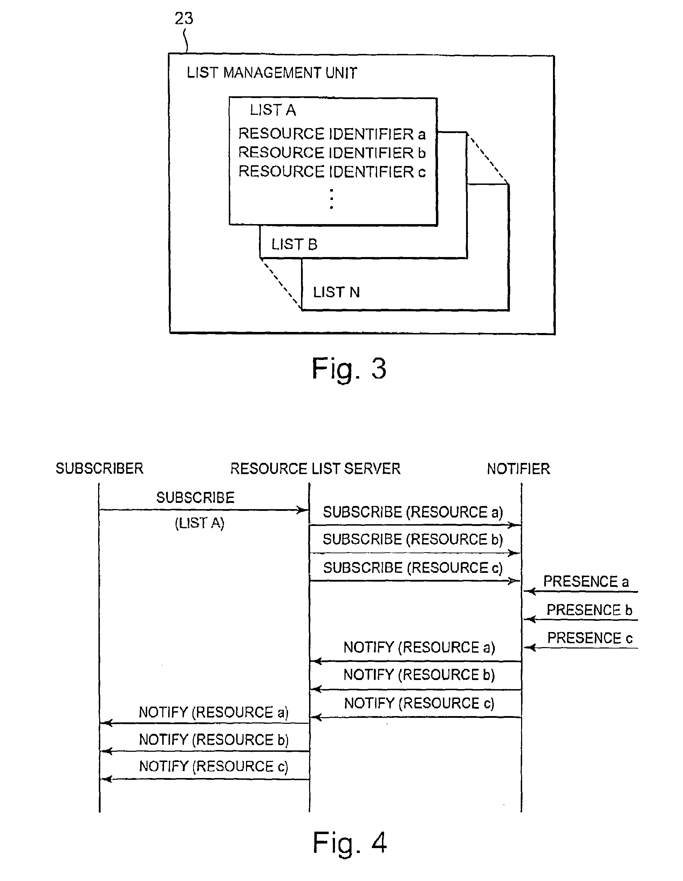

Fig. 3 shows typical list tables in the list management unit 23 in the information exchange system according to the first embodiment.

The list management unit 23 includes list tables corresponding to lists A to N, and resource identifiers are registered in the individual list tables corresponding to the lists A to N. For example, resource identifiers a to c are registered in the list table corresponding to the list A.

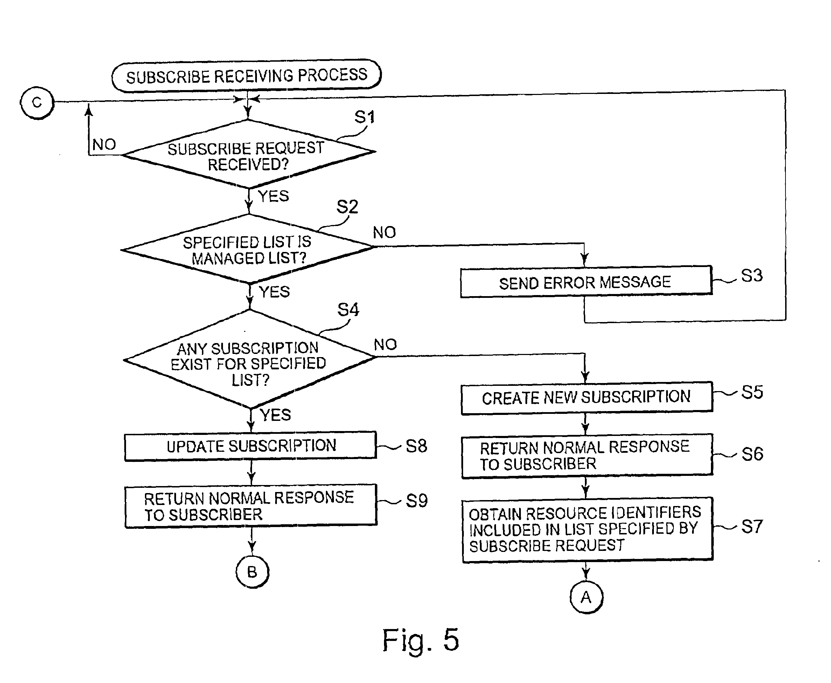

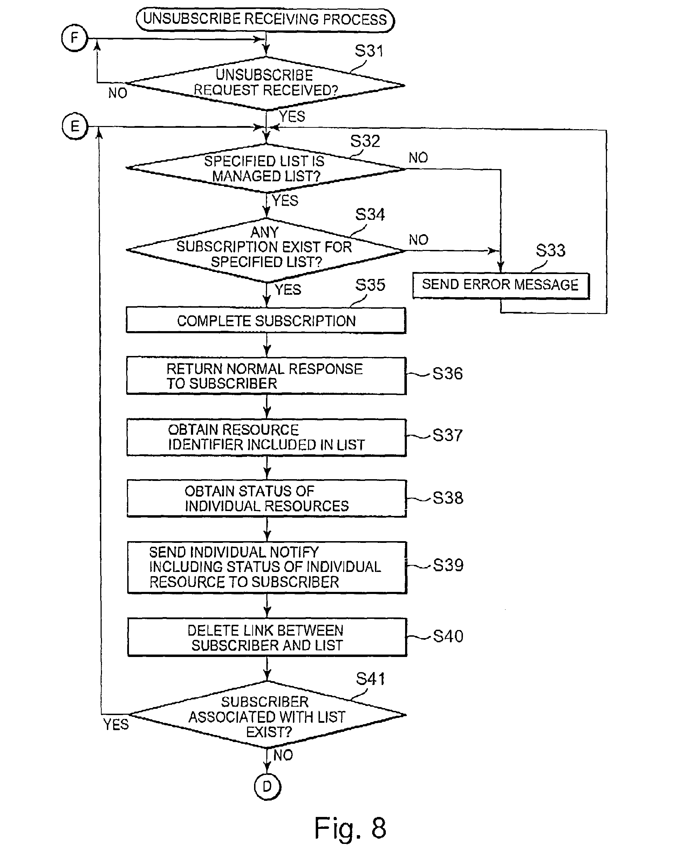

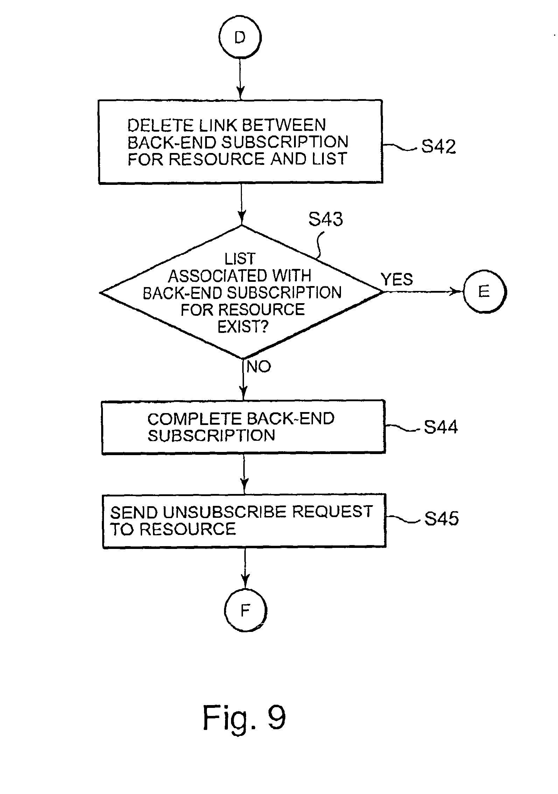

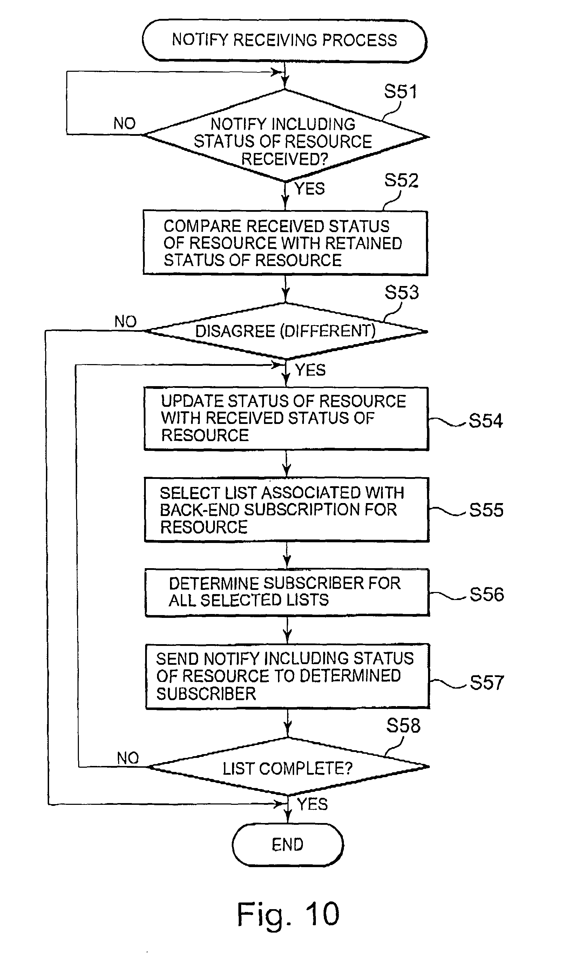

Fig. 4 is a sequence chart showing the operation of the information exchange system according the first embodiment. Figs. 5 to 7 are flowcharts showing the process of receiving a SUBSCRIBE according to the first embodiment. Figs. 8 and 9 are flowcharts showing the process of receiving an UNSUBSCRIBE according to the first embodiment. Fig. 10 is a flowchart showing the process of receiving a NOTIFY according to the first embodiment. The operation of the information exchange system according to the first embodiment will now be described with reference to Figs. 2 to 10. The process in the resource list server 2 shown in Fig. 2 can be performed by a computer (not shown) executing programs, and the process shown in Figs. 5 to 10 can be also performed by this computer executing programs.

In the process of receiving a SUBSCRIBE, in step S1 in Fig. 5, it is determined whether the SUBSCRIBE request receiving unit 21 has received a SUBSCRIBE request from the subscriber 1. When it is determined that the SUBSCRIBE request receiving unit 21 has received a SUBSCRIBE request from the subscriber 1, the process proceeds to step S2. In step S2, the SUBSCRIBE request receiving unit 21 determines whether a specified list is managed by the list management unit 23. When the SUBSCRIBE request receiving unit 21 determines that the specified list is not managed by the list management unit 23, the process proceeds to step S3 where an error message is sent to the subscriber 1. On the other hand, when the SUBSCRIBE request receiving unit 21 determines that the specified list is managed by the list management unit 23, the SUBSCRIBE request receiving unit 21 transfers the SUBSCRIBE request to the subscription management unit 241, and the process proceeds to step S4.

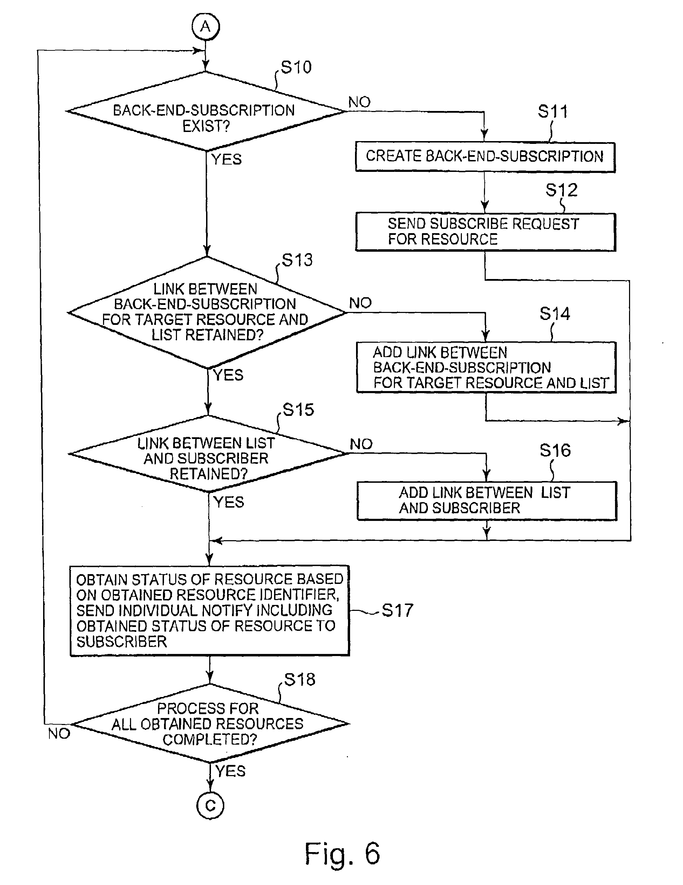

In step S4, the subscription management unit 241 determines whether any subscription exists for the specified list. When the subscription management unit 241 determines that no subscription exists for the specified list, the subscription management unit 241 creates a new subscription in step S5 and returns a normal response to the subscriber 1 in step S6. When the subscription management unit 241 creates the new subscription, in step S7, the subscription control unit 24 obtains from the list management unit 23 resource identifiers included in the list specified by the SUBSCRIBE request. Then, the following process shown in Fig. 6 is repeated for all resources corresponding to the obtained resource identifiers.

In step S10 in Fig. 6, it is determined whether any back-end subscription exists. When it is determined that no back-end subscription exists, the back-end-subscription-and-list link management unit 243 creates back-end subscriptions in step S11, and a SUBSCRIBE request for each resource is sent from the SUBSCRIBE request sending unit 25 to the notifier 3 in step S12. Then, the process proceeds to step S17.

On the other hand, when it is determined in step S10 that back-end subscriptions exist, the process proceeds to step S13. In step S13, it is determined whether the back-end-subscription-and-list link management unit 243 retains information on the links between the back-end subscriptions for target resources and the list. When it is determined that the back-end-subscription-and-list link management unit 243 does not retain information on the links between the back-end subscriptions for the target resources and the list, the back-end-subscription-and-list link management unit 243 adds information on the links between the back-end subscriptions for the target resources and the list in step S14, and the process proceeds to step S17. On the other hand, when it is determined that the back-end-subscription-and-list link management unit 243 retains information on the links between the back-end subscriptions for the target resources and the list, the process proceeds to step S15. In step S15, it is determined whether the list-and-subscriber link management unit 242 retains information on the link between the list and the subscriber 1. When it is determined that the list-and-subscriber link management unit 242 does not retain information on the link between the list and the subscriber 1, the list-and-subscriber link management unit 242 adds information on the link between the list and the subscriber 1 in step S16, and the process proceeds to step S17. When it is determined that the list-and-subscriber link management unit 242 retains information on the link between the list and the subscriber 1, the process directly proceeds to step S17.

In step S17, the subscription control unit 24 obtains information on the status of the resources through the resource status management unit 244 on the basis of the resource identifiers obtained from the list management unit 23. Then, the subscription control unit 24 individually sends a NOTIFY message that includes the obtained information to the subscriber 1 through the NOTIFY sending unit 22.

Then, in step S18, it is determined whether the aforementioned process (steps S10 to S17) has been performed on all of the resources corresponding to the obtained resource identifiers. The resource list server 2 repeats the aforementioned process until the process has been performed on all of the resources corresponding to the obtained resource identifiers.

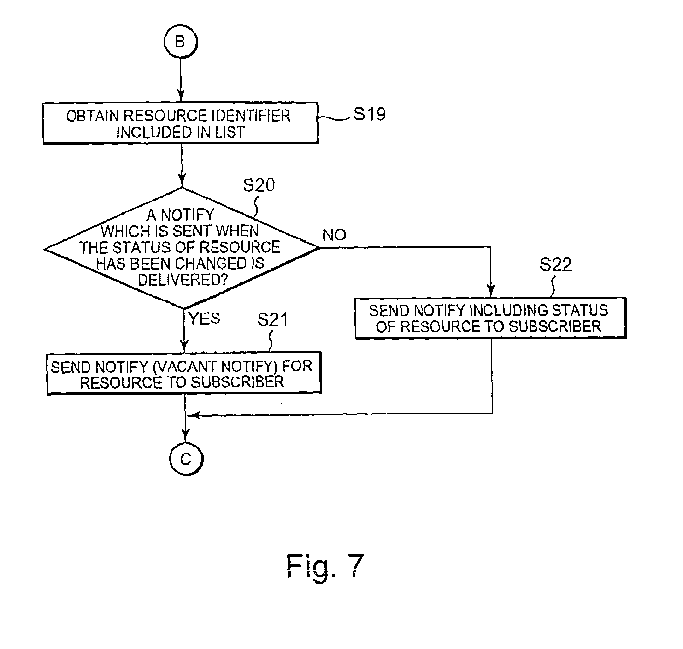

Returning back to Fig. 5, when the subscription management unit 241 determines in step S4 that a subscription exists for the specified list, the subscription management unit 241 updates the subscription in step S8 and returns a normal response to the subscriber 1 in step S9. Then, the process proceeds to step S19 in Fig. 7.

In step S19, the subscription control unit 24 obtains the resource identifiers included in the list from the list management unit 23. Then, in step S20, it is determined whether a NOTIFY that is sent when the status of a resource has changed has been delivered. When it is determined that a NOTIFY that is sent when the status of a resource has changed has been delivered, in step S21, the subscription control unit 24 individually sends a NOTIFY (vacant NOTIFY) that includes no content for a resource corresponding to the obtained resource identifier to the subscriber 1 through the NOTIFY sending unit 22. On the other hand, when it is determined that a NOTIFY that is sent when the status of a resource has changed has not been delivered, in step S22, the subscription control unit 24 individually sends a NOTIFY that includes information on the status of the resource corresponding to the obtained resource identifier to the subscriber 1 through the NOTIFY sending unit 22.

In the process of receiving an UNSUBSCRIBE, in step S31 in Fig. 8, it is determined whether the SUBSCRIBE request receiving unit 21 has received an UNSUBSCRIBE request from the subscriber 1. When it is determined that the SUBSCRIBE request receiving unit 21 has received an UNSUBSCRIBE request from the subscriber 1, the process proceeds to step S32. In step S32, the SUBSCRIBE request receiving unit 21 determines whether a specified list is managed by the list management unit 23. When the SUBSCRIBE request receiving unit 21 determines that the specified list is not managed by the list management unit 23, the process proceeds to step S33 where an error message is sent to the subscriber 1. On the other hand, when the SUBSCRIBE request receiving unit 21 determines that the specified list is managed by the list management unit 23, the SUBSCRIBE request receiving unit 21 transfers the UNSUBSCRIBE request to the subscription management unit 241, and the process proceeds to step S34.

In step S34, the subscription management unit 241 determines upon receiving the UNSUBSCRIBE request whether any subscription exists for the specified list. When the subscription management unit 241 determines that a subscription exists for the specified list, the subscription management unit 241 stops the subscription in step S35 and returns a normal response to the subscriber 1 in step S36. Then, the process proceeds to step S37. When the subscription management unit 241 determines that no subscription exists for the specified list, in step S33, the subscription management unit 241 sends an error message to the subscriber 1.

In step S37, the subscription control unit 24 obtains resource identifiers included in the list from the list management unit 23 upon stopping the subscription. Then, the subscription control unit 24 obtains information on the status of individual resources corresponding to the resource identifiers from the resource status management unit 244 in step S38 and individually sends NOTIFY messages that include the obtained information to the subscriber 1 through the NOTIFY sending unit 22 in step S39. Then, in step S40, the subscription control unit 24 deletes the link between the subscriber 1 and the list from the list-and-subscriber link management unit 242, and the process proceeds to step S41.

In step S41, it is determined whether any subscriber is associated with the list. When it is determined that no subscriber is associated with the list, the subscription control unit 24 performs the following process on back-end subscriptions for the individual resources. The back-end subscriptions are managed by the back-end-subscription-and-list link management unit 243.

In step S42 in Fig. 9, the subscription control unit 24 deletes the links between the back-end subscriptions for the resources and the list. Then, in step S43, it is determined whether any list is associated with the back-end subscriptions. When it is determined that no list is associated with the back-end subscriptions, the subscription control unit 24 stops the back-end subscriptions in step S44. Then, in step S45, the subscription control unit 24 sends UNSUBSCRIBE requests to the resources through the SUBSCRIBE request sending unit 25.

In the process of receiving a NOTIFY message, in step S51 in Fig. 10, it is determined whether the NOTIFY receiving unit 26 has received a NOTIFY that includes information on the status of a resource from the notifier 3 (for example, a presence server) for the resource. When it is determined that the NOTIFY receiving unit 26 has received a NOTIFY that includes information on the status of a resource from the notifier 3 for the resource, the NOTIFY receiving unit 26 transfers the NOTIFY to the subscription management unit 241, and the process proceeds to step S52. In step S52, the subscription management unit 241 compares the status of the resource, which has been received, with the status of the resource managed by the resource status management unit 244. Then, in step S53, the subscription management unit 241 determines whether these pieces of status information are different from each other. When the subscription management unit 241 determines that these pieces of status information are different from each other, the following process (steps S54 to S57) is performed. When the subscription management unit 241 determines that these pieces of status information agree with each other, the process of receiving a NOTIFY is completed.

In step S54, the subscription management unit 241 updates the status of the resource managed by the resource status management unit 244 with the status of the resource, which has been received. Then, in step S55, the subscription management unit 241 obtains lists associated with the back-end subscription for the resource from the back-end-subscription-and-list link management unit 243.

Then, the subscription management unit 241 determines subscribers that are managed by the list-and-subscriber link management unit 242 for all of the obtained lists in step S56 and sends a NOTIFY that includes the status of the resource to each subscriber 1, which has been determined, through the NOTIFY sending unit 22 in step S57. Then, in step S58, it is determined whether the aforementioned process (steps S54 to S57) has been performed on all resources included in the list. The process (steps S54 to S57) is repeated until the process has been performed on all resources included in the list.

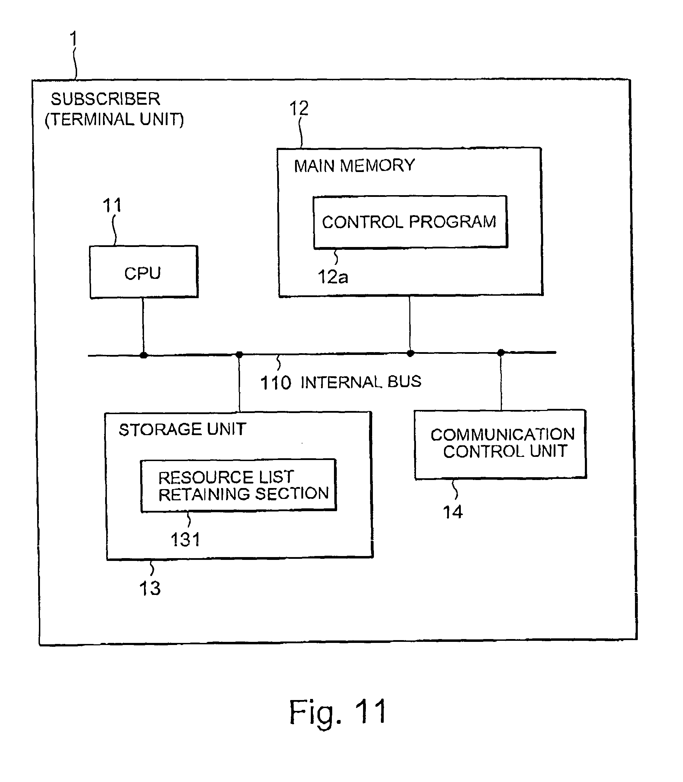

Fig. 11 is a block diagram showing the structure of the subscriber 1 in the information exchange system according to the first embodiment.

In Fig. 11, the subscriber (terminal unit) 1 includes a central processing unit (CPU) 11, a main memory 12 that stores a control program 12a that is executed by the CPU 11, a storage unit 13 that is used as a work area when the CPU 11 executes the control program 12a, and a communication control unit 14 that controls communication with the resource list server 2. The CPU 11, the main memory 12, the storage unit 13, and the communication control unit 14 are connected to each other via an internal bus 110. The storage unit 13 includes a resource list retaining section 131 that retains resource lists that are obtained from the resource list server 2.

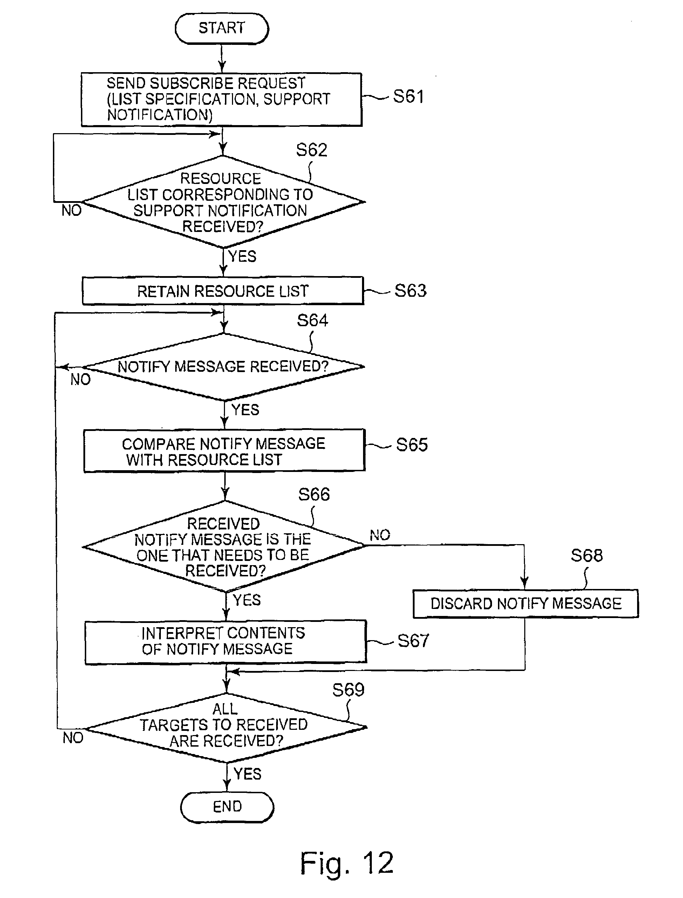

Fig. 12 is a flowchart showing typical operation of the subscriber 1 according to the first embodiment. The operation of the subscriber 1 will now be described with reference to Figs. 11 and 12. The process shown in Fig. 12 is performed by the CPU 11 executing the control program 12a.

In step S61 in Fig. 12, the subscriber 1 sends a SUBSCRIBE request that includes list specification and a support notification to the resource list server 2. Then, in step S62, it is determined whether the subscriber 1 has received a resource list corresponding to the support notification from the resource list server 2. When it is determined that the subscriber 1 has received a resource list, corresponding to the support notification, from the resource list server 2, the subscriber 1 stores the resource list in the resource list retaining section 131 in the storage unit 13 in step S63.

Then, in step S64, it is determined whether the subscriber 1 has received a NOTIFY in response to the SUBSCRIBE request from the resource list server 2. When it is determined that the subscriber 1 has received NOTIFY messages from the resource list server 2 in response to the SUBSCRIBE request, in step S65, the subscriber 1 compares the NOTIFY messages with the resource list stored in the resource list retaining section 131.

Then, in step S66, the subscriber 1 determines whether each of the received NOTIFY messages is a NOTIFY message that needs to be received. When the subscriber 1 determines that each NOTIFY message is a NOTIFY message that needs to be received, the subscriber 1 interprets the content of each NOTIFY message in step S67, and the process proceeds to step S69. When the subscriber 1 determines that each NOTIFY message is not a NOTIFY message that needs to be received, the subscriber 1 discards the NOTIFY message in step S68, and the process proceeds to step S69. In step S69, it is determined whether the subscriber 1 has received NOTIFY messages that need to be received for all resources included in the list specified in the aforementioned SUBSCRIBE request. The subscriber 1 repeats the aforementioned process until the subscriber 1 has received NOTIFY messages that need to be received for all resources included in the list.

In the first embodiment, when notifications of the status of individual resources need to be received, SUBSCRIBE requests for a plurality of resources can be put together into one request, as described above. Thus, the network load can be reduced when SUBSCRIBE requests are sent to start or update subscriptions.

Moreover, in the first embodiment, the network load can be reduced by sending a plurality of NOTIFY messages that include small content instead of sending one NOTIFY that includes large content. Moreover, in the first embodiment, load of interpretation of the content of one NOTIFY on the subscriber 1 can be reduced by reducing the content of the NOTIFY. Although a SUBSCRIBE request from the subscriber 1 is processed by the resource list server 2 and transferred to the notifier 3 in the present embodiment, the present embodiment is not restrictive. Even when the list management unit 23 is provided in the notifier 3 and when a SUBSCRIBE request from the subscriber 1 is transferred directly to the notifier 3, the same advantageous effects as described above can be achieved.

### (Second Embodiment)

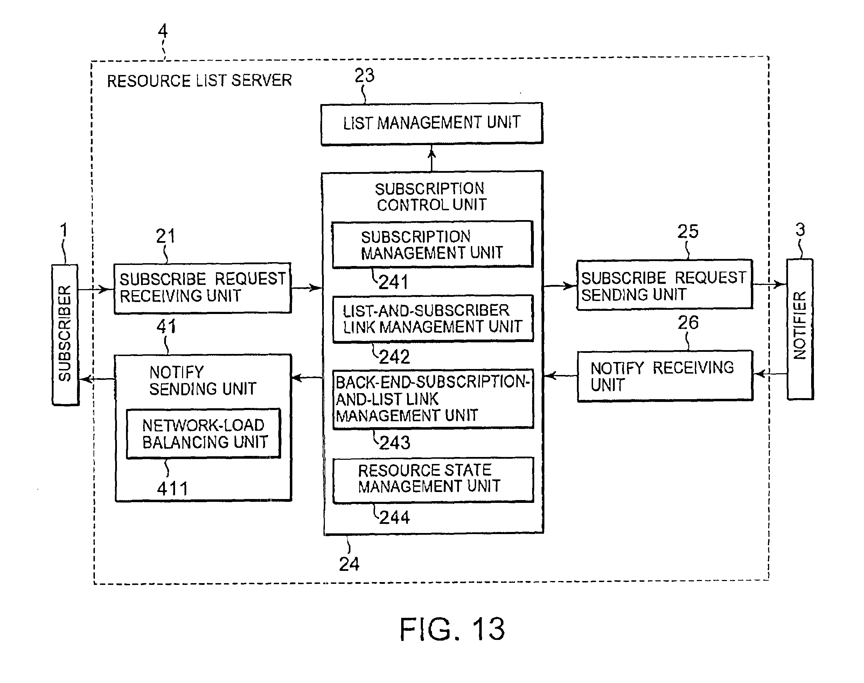

Fig. 13 is a block diagram showing the structure of an information exchange system according to a second embodiment of the present invention. In Fig. 13, the structure of the information exchange system according to the second embodiment is the same as that of the information exchange system according to the first embodiment shown in Fig. 2 except that a network-load balancing unit 411 is provided in a NOTIFY sending unit 41 in a resource list server 4 in the information exchange system according to the second embodiment. Thus, in Fig. 13, the same reference numerals as in Fig. 2 are assigned to the corresponding components. The operations of the corresponding components in the second embodiment are the same as those in the first embodiment.

The network-load balancing unit 411 can reduce the network load by staggering the transmission timings of NOTIFY messages directed to the subscriber 1. Moreover, in the second embodiment, load of processing on the subscriber 1 can be reduced.

The network-load balancing unit 411 may have the following functions:
1. A function of staggering the transmission timings of NOTIFY messages directed to the same subscriber.
2. A function of staggering the transmission timings of NOTIFY messages among a plurality of subscribers (in this function, the transmission timings of NOTIFY messages directed to the same subscriber are not staggered).
3. A function of staggering the transmission timings of NOTIFY messages without making a distinction between subscribers.

A method may be used in the network-load balancing unit 411, in which the network-load balancing unit 411 waits for a period of time that is calculated by multiplying standard transmission latency by a random number before sending individual NOTIFY messages. In this case, the standard transmission latency may be fixed or depend on the network load. In a case where the standard transmission latency depends on the network load, the higher the network load, the longer the standard transmission latency.

In the second embodiment, the network-load balancing unit 411 is provided in the NOTIFY sending unit 41 in the resource list server 4 to stagger the transmission timings of NOTIFY messages, as described above. Thus, the network load can be reduced.

### (Third Embodiment)

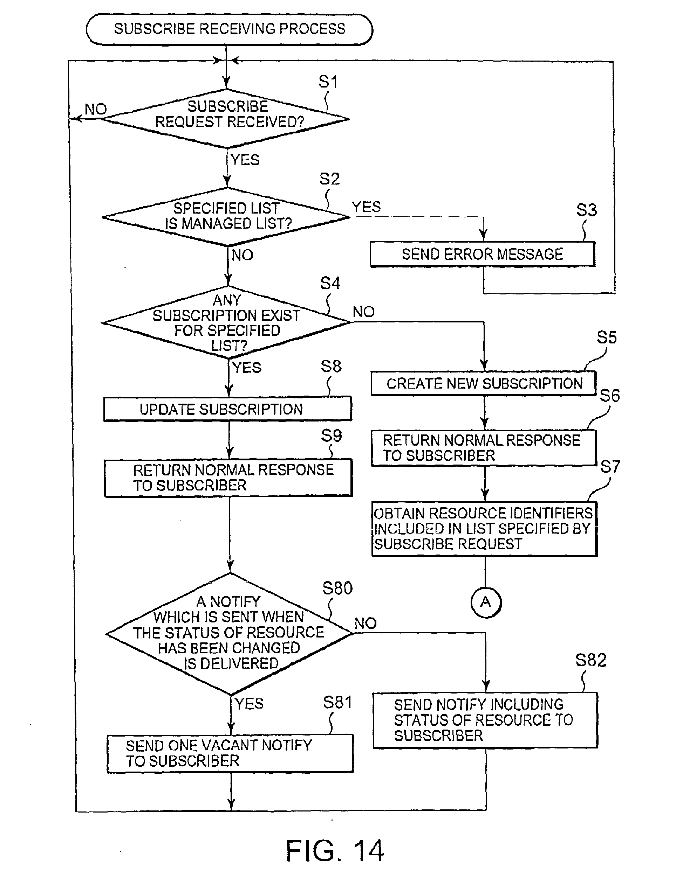

Fig. 14 is a flowchart showing the process of receiving a SUBSCRIBE (updating) according to a third embodiment of the present invention. The structure of an information exchange system according to the third embodiment is the same as that of the information exchange system according to the first embodiment shown in Fig. 2.

The operation of the information exchange system according to the third embodiment will now be described with reference to Figs. 2 and 14. The process shown in Fig. 14 is performed by a computer executing programs, as in the first embodiment. The information exchange system according to the third embodiment may have the same structure as the information exchange system according to the second embodiment shown in Fig. 13.

The third embodiment is different from the first embodiment in that a NOTIFY message that includes no content is sent for a list instead of each resources when a subscription is updated. The NOTIFY message is sent from the NOTIFY sending unit 22.

In the process of receiving a SUBSCRIBE (updating), in step S1 in Fig. 14, it is determined whether the SUBSCRIBE request receiving unit 21 has received a SUBSCRIBE request from the subscriber 1. When it is determined that the SUBSCRIBE request receiving unit 21 has received a SUBSCRIBE request from the subscriber 1, the process proceeds to step S2. In step S2, the SUBSCRIBE request receiving unit 21 determines whether a specified list is managed by the list management unit 23. When the SUBSCRIBE request receiving unit 21 determines that the specified list is not managed by the list management unit 23, the process proceeds to step S3 where an error message is sent to the subscriber 1. On the other hand, when the SUBSCRIBE request receiving unit 21 determines that the specified list is managed by the list management unit 23, the SUBSCRIBE request receiving unit 21 transfers the SUBSCRIBE request to the subscription management unit 241, and the process proceeds to step S4.

In step S4, the subscription management unit 241 determines whether any subscription exists for the specified list. When the subscription management unit 241 determines that no subscription exists for the specified list, the subscription management unit 241 creates a new subscription in step S5 and returns a normal response to the subscriber 1 in step S6. When the subscription management unit 241 creates the new subscription, in step S7, the subscription control unit 24 obtains from the list management unit 23 resource identifiers included in the list specified by the SUBSCRIBE request. Then, the aforementioned process (step S10 and subsequent steps in Fig. 6) in the first embodiment is repeated for all resources corresponding to the obtained resource identifiers.

When the subscription management unit 241 determines in step S4 that a subscription exists for the specified list, the subscription management unit 241 updates the subscription in step S8 and returns a normal response to the subscriber 1 in step S9. Then, the process proceeds to step S80.

In step S80, it is determined whether a NOTIFY that is sent when the status of resources has changed has been delivered. When it is determined that a NOTIFY that is sent when the status of resources has changed has been delivered, in step S81, the subscription control unit 24 sends a NOTIFY that includes no content to the subscriber 1. On the other hand, when it is determined that a NOTIFY that is sent when the status of resources has changed has not been delivered, in step S82, the subscription control unit 24 sends a NOTIFY that includes information on the status of the resources to the subscriber 1.

In the third embodiment, NOTIFY messages that include no content and are sent to the subscriber 1 when a subscription is updated can be put together into one message, as described above. Thus, the network load can be reduced.

In the structure and operation according to the present invention, network load due to NOTIFY messages that are sent from the notifier 3 for resources to the subscriber 1 can be reduced.

The present invention can be applied to not only the Internet but also presence services for sending a notification of the presence or status of everything (for example, status such as "attended" or "out"), in particular, presence services in a mobile environment.

## Claims

1. An information exchange system comprising a first terminal unit (3), a second terminal unit (1), and a management server (2), which is
**characterized in that**:
the first terminal unit includes monitoring means that monitors the status of at least one object to be monitored and notification means that sends the management server a notification of the status of said at least one object to be monitored,
the second terminal unit includes status notification request sending means that sends the management server a status notification request that includes information for specifying a group of objects to be monitored, the group including said at least one object to be monitored, and
the management server includes monitored-object status retaining means (244) that receives the status of said at least one object to be monitored from the first terminal unit and retains the received status and first transmission processing means that sends the second terminal unit a notification signal for each of said at least one object to be monitored, the notification signal including the status of each of said at least one object to be monitored.

2. The information exchange system according to Claim 1, wherein the management server includes second transmission processing means instead of the first transmission processing means, and the second transmission processing means sends the second terminal unit a plurality of notification signals that include the status of said at least one object to be monitored.

3. The information exchange system according to Claim 2, wherein the management server further includes balancing means (411) that staggers transmission timings of the plurality of notification signals.

4. The information exchange system according to any one of Claims 1 to 3, wherein the second terminal unit monitors the status of said at least one object to be monitored until the status notification request is canceled.

5. The information exchange system according to any one of Claims 1 to 4, wherein the second terminal unit monitors the status of said at least one object to be monitored for a predetermined period of time specified by the status notification request.

6. The information exchange system according to any one of Claims 1 to 5, wherein the second terminal unit further includes information obtaining means that obtains information on the group of objects to be monitored from the management server and information interpreting means that interprets the information on the group of objects to be monitored.

7. The information exchange system according to Claim 6, wherein the second terminal unit sends the management server a support notification to obtain the information on the group of objects to be monitored from the management server.

8. The information exchange system according to any one of Claims 1 to 7, wherein the information for specifying the group of objects to be monitored represents identification information of a subset of said at least one object to be monitored, the identification information being managed by the management server.

9. The information exchange system according to any one of Claims 1 to 8, wherein the information for specifying the group of objects to be monitored represents at least one list of said at least one object to be monitored.

10. An information exchange system comprising a notifier (3), a subscriber (1), and a management server (2), which is **characterized in that**:
the notifier includes monitoring means that monitors the status of at least one resource and notification means that sends the management server a notification of the status of said at least one resource with a first NOTIFY message,
the subscriber includes SUBSCRIBE request sending means that sends the management server a SUBSCRIBE request that includes information for specifying a group of resources, the group including said at least one resource, and
the management server includes resource status retaining means (244) that receives the status of said at least one resource sent from the notifier with the first NOTIFY message and retains the received status and first transmission processing means that sends the subscriber a second NOTIFY message for each of said at least one resource, the second NOTIFY message including the status of each of said at least one resource.

11. The information exchange system according to Claim 10, wherein the management server includes second transmission processing means instead of the first transmission processing means, and the second transmission processing means sends the subscriber a plurality of NOTIFY messages, as said second NOTIFY message, that include the status of said at least one resource.

12. The information exchange system according to Claim 11, wherein the management server further includes balancing means (411) that staggers transmission timings of the plurality of NOTIFY messages.

13. The information exchange system according to any one of Claims 10 to 12, wherein the subscriber monitors the status of said at least one resource until the SUBSCRIBE request is canceled.

14. The information exchange system according to any one of Claims 10 to 13, wherein the subscriber monitors the status of said at least one resource for a predetermined period of time specified by the SUBSCRIBE request.

15. The information exchange system according to any one of Claims 10 to 14, wherein the subscriber further includes information obtaining means that obtains information on the group of resources from the management server and information interpreting means that interprets the information on the group of resources.

16. The information exchange system according to Claim 15, wherein the subscriber sends the management server a support notification to obtain the information on the group of resources from the management server.

17. The information exchange system according to any one of Claims 10 to 16, wherein the information for specifying the group of resources represents identification information of a subset of said at least one resource, the identification information being managed by the management server.

18. The information exchange system according to any one of Claims 10 to 17, wherein the information for specifying the group of resources represents at least one list of said at least one resource.

19. A management server (2) for an information exchange system including a first terminal unit (3) and a second terminal unit (1), which is **characterized in that**:
the first terminal unit includes monitoring means that monitors the status of at least one object to be monitored and notification means that sends a notification of the status of said at least one object to be monitored; and
the second terminal unit includes status notification request sending means that sends a status notification request that includes information for specifying a group of objects to be monitored, the group including said at least one object to be monitored,
the management server comprising:
monitored-object status retaining means (244) that receives the status of said at least one object to be monitored from the first terminal unit and retains the received status; and
first transmission processing means that sends the second terminal unit a notification signal for each of said at least one object to be monitored, the notification signal including the status of each of said at least one object to be monitored.

20. The management server according to Claim 19, wherein the management server includes second transmission processing means instead of the first transmission processing means, and the second transmission processing means sends the second terminal unit a plurality of notification signals that include the status of said at least one object to be monitored.

21. The management server according to Claim 20, further comprising balancing means (411) that staggers transmission timings of the plurality of notification signals.

22. The management server according to any one of Claims 19 to 21, wherein the information for specifying the group of objects to be monitored represents identification information of a subset of said at least one object to be monitored, the identification information being managed by the management server.

23. The management server according to any one of Claims 19 to 22, wherein the information for specifying the group of objects to be monitored represents at least one list of said at least one object to be monitored.

24. A management server (2) for an information exchange system including a notifier (3) and a subscriber (1), which is **characterized in that**:
the notifier includes monitoring means that monitors the status of at least one resource and notification means that sends a notification of the status of said at least one resource with a first NOTIFY message, and
the subscriber includes SUBSCRIBE request sending means that sends a SUBSCRIBE request that includes information for specifying a group of resources, the group including said at least one resource,
the management server comprising:
resource status retaining means (244) that receives the status of said at least one resource sent from the notifier with the first NOTIFY message and retains the received status; and
first transmission processing means that sends the subscriber a second NOTIFY message for each of said at least one resource, the second NOTIFY message including the status of each of said at least one resource.

25. The management server according to Claim 24, wherein the management server includes second transmission processing means instead of the first transmission processing means, and the second transmission processing means sends the subscriber a plurality of NOTIFY messages, as said second NOTIFY message, that include the status of said at least one resource.

26. The management server according to Claim 25, further comprising balancing means (411) that staggers transmission timings of the plurality of NOTIFY messages.

27. The management server according to any one of Claims 24 to 26, wherein the information for specifying the group of resources represents identification information of a subset of said at least one resource, the identification information being managed by the management server.

28. The management server according to any one of Claim 24 to 27, wherein the information for specifying the group of resources represents at least one list of said at least one resource.

29. A terminal unit (1) that constitutes, together with a management server (2) and a different terminal unit (3), an information exchange system, which is **characterized in that**:
the different terminal unit includes monitoring means that monitors the status of at least one object to be monitored and notification means that sends the management server a notification of the status of said at least one object to be monitored,
the terminal unit comprising:
status notification request sending means that sends the management server a status notification request that includes information for specifying a group of objects to be monitored, the group including said at least one object to be monitored;
first determining means that determines whether a notification signal represents a status notification requested with the status notification request when the notification signal is sent from the management server for each of said at least one object to be monitored, the notification signal including the status of each of said at least one object to be monitored; and
information interpreting means that interprets the notification signal when it is determined that the notification signal represents the status notification requested with the status notification request.

30. The terminal unit according to Claim 29, wherein the terminal unit includes second determining means instead of the first determining means, and the second determining means determines whether a plurality of notification signals represent status notifications requested with the status notification request when the notification signals are sent from the management server, the notification signals including the status of said at least one object to be monitored.

31. The terminal unit according to Claim 30, wherein transmission timings of the plurality of notification signals directed to the terminal unit are staggered in the management server.

32. The terminal unit according to any one of Claims 29 to 31, wherein the terminal unit monitors the status of said at least one object to be monitored until the status notification request is canceled.

33. The terminal unit according to any one of Claims 29 to 32, wherein the terminal unit monitors the status of said at least one object to be monitored for a predetermined period of time specified by the status notification request.

34. The terminal unit according to any one of Claims 29 to 33, further comprising information obtaining means that obtains information on the group of objects to be monitored from the management server, wherein the terminal unit determines on the basis of the information on the group of objects to be monitored whether the notification signals represent status notifications requested with the status notification request when the terminal unit receives the notification signals.

35. The terminal unit according to Claim 34, wherein the terminal unit sends the management server a support notification to obtain the information on the group of objects to be monitored from the management server.

36. The terminal unit according to any one of Claims 29 to 35, wherein the information for specifying the group of objects to be monitored represents identification information of a subset of said at least one object to be monitored, the identification information being managed by the management server.

37. The terminal unit according to any one of Claims 29 to 36, wherein the information for specifying the group of objects to be monitored represents at least one list of said at least one object to be monitored.

38. A terminal unit (1) that constitutes, together with a management server (2) and a different terminal unit (3), an information exchange system, which is **characterized in that**:
the different terminal unit includes monitoring means that monitors the status of at least one resource and notification means that sends the management server a notification of the status of said at least one resource, the terminal unit comprising:
SUBSCRIBE request sending means that sends the management server a SUBSCRIBE request that includes information for specifying a group of resources, the group including said at least one resource;
first determining means that determines whether a NOTIFY message represents a status notification requested with the SUBSCRIBE request when the NOTIFY message is sent from the management server for each of said at least one resource, the NOTIFY message including the status of each of said at least one resource; and
information interpreting means that interprets the NOTIFY message when it is determined that the NOTIFY message represents the status notification requested with the SUBSCRIBE request.

39. The terminal unit according to Claim 38, wherein the terminal unit includes second determining means instead of the first determining means, and the second determining means determines whether a plurality of NOTIFY messages represent status notifications requested with the SUBSCRIBE request when the NOTIFY messages are sent from the management server, the NOTIFY messages including the status of said at least one resource.

40. The terminal unit according to Claim 39, wherein transmission timings of the NOTIFY messages directed to the terminal unit are staggered in the management server.

41. The terminal unit according to any one of Claims 38 to 40, wherein the terminal unit monitors the status of said at least one resource until the SUBSCRIBE request is canceled.

42. The terminal unit according to Claim 38 or 39, wherein the terminal unit monitors the status of said at least one resource for a predetermined period of time specified by the SUBSCRIBE request.

43. The terminal unit according to any one of Claims 38 to 42, further comprising information obtaining means that obtains information on the group of resources from the management server, wherein the terminal unit determines on the basis of the information on the group of resources whether the NOTIFY messages represent status notifications requested with the SUBSCRIBE request when the terminal unit receives the NOTIFY messages.

44. The terminal unit according to Claim 43, wherein the terminal unit sends the management server a support notification to obtain the information on the group of resources from the management server.

45. The terminal unit according to any one of Claims 38 to 44, wherein the information for specifying the group of resources represents identification information of a subset of said at least one resource, the identification information being managed by the management server.

46. The terminal unit according to any one of Claims 38 to 45, wherein the information for specifying the group of resources represents at least one list of said at least one resource.

47. The terminal unit according to any one of Claims 38 to 46, wherein the terminal unit is a subscriber (1) that monitors the status of said at least one resource by sending the SUBSCRIBE request, and the different terminal unit is a notifier (3) that sends notifications of the status of said at least one resource with the NOTIFY messages.

48. A method for reducing network load, the method being applied to an information exchange system that includes a first terminal unit (3), a second terminal unit (1), and a management server (2), which is
**characterized in that**:
the first terminal unit includes monitoring means that monitors the status of at least one object to be monitored and notification means that sends a notification of the status of said at least one object to be monitored, and
the second terminal unit includes status notification request sending means that sends a status notification request that includes information for specifying a group of objects to be monitored, the group including said at least one object to be monitored,
the method comprising:
a step in the management server of receiving the status of said at least one object to be monitored from the first terminal unit and retaining the received status in monitored-object status retaining means (244); and
a first transmitting step in the management server of sending the second terminal unit a notification signal for each of said at least one object to be monitored, the notification signal including the status of each of said at least one object to be monitored.

49. The method according to Claim 48, wherein the method includes a second transmitting step in the management server instead of the first transmitting step, and, in the second transmitting step, a plurality of notification signals that include the status of said at least one object to be monitored are sent to the second terminal unit.

50. The method according to Claim 49, further comprising a step in the management server of staggering transmission timings of the notification signals.

51. The method according to any one of Claims 48 to 50, further comprising a step in the second terminal unit of monitoring the status of said at least one object to be monitored until the status notification request is canceled.

52. The method according to any one of Claims 48 to 51, further comprising a step in the second terminal unit of monitoring the status of said at least one object to be monitored for a predetermined period of time specified by the status notification request.

53. The method according to any one of Claims 48 to 52, further comprising a step in the second terminal unit of obtaining information on the group of objects to be monitored from the management server and a step in the second terminal unit of interpreting the information on the group of objects to be monitored.

54. The method according to Claim 53, further comprising a step in the second terminal unit of sending the management server a support notification to obtain the information on the group of objects to be monitored from the management server.

55. The method according to any one of Claims 48 to 54, wherein the information for specifying the group of objects to be monitored represents identification information of a subset of said at least one object to be monitored, the identification information being managed by the management server.

56. The method according to any one of Claims 48 to 55, wherein the information for specifying the group of objects to be monitored represents at least one list of said at least one object to be monitored.

57. A method for reducing network load, the method being applied to an information exchange system that includes a notifier (3), a subscriber (1), and a management server (2), which is **characterized in that**:
the notifier includes monitoring means that monitors the status of at least one resource and notification means that sends a notification of the status of said at least one resource with a first NOTIFY message, and
the subscriber includes SUBSCRIBE request sending means that sends a SUBSCRIBE request that includes information for specifying a group of resources, the group including said at least one resource,
the method comprising:
a step in the management server of receiving the status of said at least one resource sent from the notifier with the first NOTIFY message and retaining the received status in resource status retaining means (244); and
a first transmitting step in the management server of sending the subscriber a second NOTIFY message for each of said at least one resource, the second NOTIFY message including the status of each of said at least one resource.

58. The method according to Claim 57, wherein the method includes a second transmitting step in the management server instead of the first transmitting step, and, in the second transmitting step, a plurality of NOTIFY messages that include the status of said at least one resource are sent to the subscriber.

59. The method according to Claim 58, further comprising a step in the management server of staggering transmission timings of the NOTIFY messages.

60. The method according to any one of Claims 57 to 59, further comprising a step in the subscriber of monitoring the status of said at least one resource until the SUBSCRIBE request is canceled.

61. The method according to any one of Claim 57 to 60, further comprising a step in the subscriber of monitoring the status of said at least one resource for a predetermined period of time specified by the SUBSCRIBE request.

62. The method according to any one of Claims 57 to 61, further comprising a step in the subscriber of obtaining information on the group of resources from the management server and a step in the subscriber of interpreting the information on the group of resources.

63. The method according to Claim 62, further comprising a step in the subscriber of sending the management server a support notification to obtain the information on the group of resources from the management server.

64. The method according to any one of Claims 57 to 63, wherein the information for specifying the group of resources represents identification information of a subset of said at least one resource, the identification information being managed by the management server.

65. The method according to any one of Claims 57 to 64, wherein the information for specifying the group of resources represents at least one list of said at least one resource.
